Europäisches Patentamt

European Patent Office

Office européen des brevets

(11) Numéro de publication : **0 469 990 A1**

# (12) DEMANDE DE BREVET EUROPEEN

(21) Numéro de dépôt : **91402131.6**

(51) Int. Cl.⁵ : **H04N 5/21**

(22) Date de dépôt : **30.07.91**

(30) Priorité : **03.08.90 FR 9009971**

(43) Date de publication de la demande :
**05.02.92 Bulletin 92/06**

(84) Etats contractants désignés :
**DE DK ES FR GB SE**

(71) Demandeur : **LABORATOIRE EUROPEEN DE
RECHERCHES ELECTRONIQUES AVANCEES,
SOCIETE EN NOM COLLECTIF
9, Place des Vosges La Défense 5
F-92400 Courbevoie (FR)**

(72) Inventeur : **Leduc, Michel
THOMSON-CSF, SCPI, Cédex 67
F-92045 Paris la Défense (FR)**

(74) Mandataire : **Chaverneff, Vladimir et al
THOMSON-CSF SCPI
F-92045 PARIS LA DEFENSE CEDEX 67 (FR)**

(54) **Procédé de correction à l'émission de signaux de télévision et dispositif de mise en oeuvre.**

(57)   Le procédé de l'invention consiste à faire émettre pendant la partie non visible de l'image une ligne de référence, à recevoir avec un récepteur étalon (11) ces émissions, à échantillonner cette ligne de référence (14), à produire un signal d'erreur à partir de la différence entre cette ligne et sa valeur théorique, à en déduire un coefficient de correction (C) pour chacun des échantillons de la ligne, et à appliquer ce coefficient de correction aux lignes des trames suivantes.

EP 0 469 990 A1

FIG.10

La présente invention se rapporte à un procédé de correction à l'émission de signaux de télévision, ainsi qu'à un dispositif de mise en oeuvre de ce procédé.

Les défauts créés lors de la transmission de signaux de télévision, tels que le phénomène de "line-tilt" (inclinaison de lignes normalement horizontales) ou celui de "linear distortion" (distorsion affectant la linéarité) n'entraînent en général pas de gêne visible à la réception lorsqu'il s'agit d'un système de télévision classique. Par contre, de tels défauts peuvent devenir très gênants dans le cas de systèmes de télévision à péage, donc à signal émis embrouillé. Dans ce cas, et en particulier lorsque l'on utilise l'embrouillage du type "line cut and rotate" (permutation de ligne autour d'un point de coupure déterminé aléatoirement) ou "discret 2", ces défauts peuvent altérer fortement la qualité des images désembrouillées.

Le phénomène de "line tilt" d'un signal vidéo est caractérisé par une inclinaison de quelques % de ce signal. Par exemple, une ligne vidéo ayant une luminance constante, normalement représentée par une ligne horizontale, est alors une ligne montant ou descendant légèrement. Ce phénomène peut avoir son origine soit dans les équipements de transmission, soit dans le démodulateur du récepteur.

La distorsion affectant la linéarité, que l'on appellera ci-après distorsion de non-linéarité, se présente en général sous la forme de suroscillations s'étendant sur toute la longueur de la ligne. Ce phénomène a les mêmes origines que le "line tilt".

La présente invention a pour objet un procédé de correction des défauts provoqués par les phénomènes précités, procédé simple à mettre en oeuvre, facilement adaptable à des équipements existants, et qui annule leurs effets ou les rende négligeables, en particulier dans les systèmes de télévision à embrouillage.

La présente invention a également pour objet un dispositif de mise en oeuvre du procédé de l'invention, qui soit simple, peu onéreux, et facile à implanter.

Le procédé conforme à l'invention consiste à faire émettre par l'émetteur, pendant au moins une partie des trames du signal vidéo, au moins une ligne de référence dans la partie non visible à l'écran des trames, à recevoir à la station émettrice, à l'aide d'un récepteur étalon, les émissions de cet émetteur, d'échantillonner et mémoriser cette ligne de référence ainsi reçue, à produire un signal d'erreur à partir de la différence entre cette ligne mémorisée et sa valeur théorique, à moyenner le signal d'erreur pendant plusieurs trames, à en déduire un coefficient de correction pour chacun des échantillons de la ligne, et à appliquer ce coefficient de correction à au moins une partie des lignes des trames suivantes.

Selon un aspect avantageux de l'invention, on pondère le coefficient de correction en fonction de la luminance de la ligne correspondante. De façon avantageuse, on détermine le niveau moyen de luminance de cette ligne.

Le dispositif de correction conforme à l'invention comporte, dans l'émetteur, entre la source de signaux vidéo et les circuits d'amplification de puissance, un convertisseur analogique /numérique suivi d'un dispositif de mémorisation, d'un circuit logique de correction et d'un convertisseur numérique /analogique, le circuit de correction étant relié à la sortie d'un récepteur étalon. De façon avantageuse, ce dispositif comporte un dispositif de détection du niveau moyen de luminance. Lorsque l'émetteur comporte un circuit encodeur d'embrouillage, le circuit de correction est branché en aval de cet encodeur.

La présente invention sera mieux comprise à la lecture de la description détaillée d'un mode de réalisation pris comme exemple non limitatif et illustré par le dessin annexé sur lequel:

- les figures 1 à 3 sont respectivement un chronogramme d'un signal vidéo non embrouillé affecté de "line-tilt", un chronogramme d'un signal vidéo embrouillé affecté de "line-tilt", et un chronogramme d'un signal vidéo affecté de distorsion de non linéarité,
- les figures 4 et 5 sont respectivement un chronogramme d'une ligne de référence émise conformément à l'invention, et un chronogramme de cette même ligne telle que reçue avec distorsion,
- la figure 6 est un chronogramme du signal d'erreur stocké conformément à l'invention, et relatif aux signaux des figures 4 et 5,
- les figures 7 et 8 sont respectivement un chronogramme d'une ligne vidéo quelconque reçue et affectée de distorsion, et un chronogramme de cette ligne après correction conformément à l'invention,
- la figure 9 est un schéma simplifié d'un circuit de production de signal d'erreur conforme à l'invention, et
- la figure 10 est un bloc-diagramme d'un dispositif de correction conforme à l'invention.

Le procédé de l'invention expliqué ci-dessous s'applique aussi bien à la correction d'erreurs de signaux de télévision d'un système conventionnel qu'à celle d'un système de télévision à embrouillage.

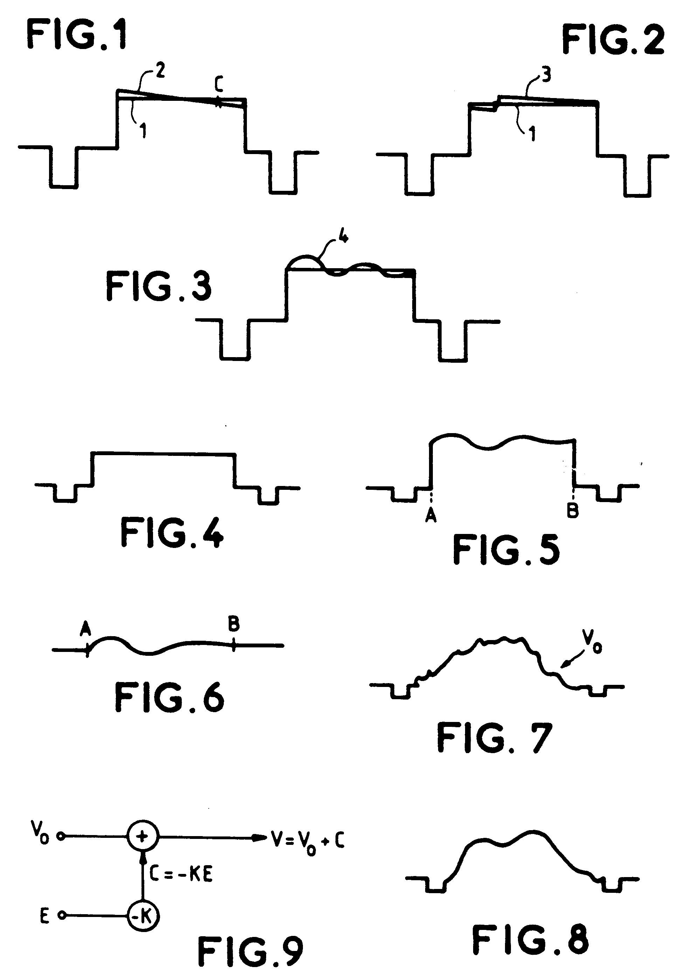

On a représenté en figure 1 un signal vidéo simplifié 1 tel qu'émis par un émetteur de télévision. La partie visible de ce signal est une simple ligne horizontale. Le phénomène de line-tilt provoque, à la réception, un léger basculement de cette ligne de plus ou moins quelques degrés ou fractions de degré et donne la ligne inclinée 2, qui est dans le cas présent une ligne descendante de gauche à droite.

Si le signal vidéo 1 est embrouillé à l'émission, il doit, en l'absence de toute distorsion, donner une ligne également horizontale. En présence du phénomène de line-tilt on obtient la ligne brisée 3 représentée en figure 2.

Dans le cas de la figure 3, on suppose également que l'émetteur envoie un signal vidéo à luminance constante qui devrait, en l'absence de toute distorsion, donner à la réception également une ligne horizontale 1'. En présence de distorsion de non linéarité, on obtient, à la réception, la courbe 4 en forme de suroscillations ("overshoot").

Selon l'invention, l'émetteur de télévision émet une ligne de référence placée dans une zone non visible de l'image, par exemple en début de trame ou dans le VBI. Dans l'exemple choisi et représenté en figure 4, on envoie sur la ligne numéro 16 un signal à luminosité constante, qui correspondrait à une ligne blanche s'il était visible à l'écran, et dont la luminosité est égale à 75% du niveau du blanc.

On a représenté en figure 5 cette même ligne de référence telle que reçue par un récepteur étalon (disposé dans la station émettrice) avec une distorsion due principalement à une distorsion de non-linéarité.

Sachant que la ligne de référence est forcément une ligne droite horizontale, il est facile d'obtenir par différence le signal d'erreur affectant la partie visible à l'écran de la ligne reçue (entre les points A et B). La forme de ce signal d'erreur est représentée en figure 6 (en fait, ce signal est numérisé, et la numérisation se faisant à fréquence élevée, on a représenté sur le dessin ce signal comme s'il était analogique).

On échantillonne la partie visible (entre A et B, de cette ligne et on la mémorise dans un registre dont la capacité est au moins suffisante pour mémoriser une ligne complète. L'échantillonnage est commandé au rythme d'un signal d'horloge apte à échantillonner des pixels. De façon avantageuse la fréquence de ce signal d'horloge est de l'ordre de grandeur de 10 MHz ou davantage, afin d'obtenir une bonne résolution.

L'information d'erreur ainsi mémorisée est moyennée sous la commande d'un microprocesseur par exemple, et ce, pendant plusieurs trames. Cette opération peut se faire par exemple à la mise sous tension de l'émetteur ou de l'embrouillage, ou à des intervalles de temps déterminés après essais. On sait que la distorsion de non linéarité dépend, dans une certaine mesure, du niveau de luminance de l'image. Des expériences ont montré qu'environ 60% de la distorsion dépend du niveau de luminance. par conséquent, il est très avantageux d'appliquer un facteur correcteur dépendant du niveau de luminance. On détermine ce facteur correcteur K par mesure du niveau moyen de luminance sur une ligne de rang n et on l'applique sur la ligne suivante n + 1, le facteur K étant compris entre 0 et 1. La détection du niveau moyen de luminance d'une ligne vidéo se fait d'une façon évidente pour l'homme de l'art par redressement et intégration.

Pour corriger les erreurs affectant le signal tel que reçu par un récepteur étalon, on effectue pendant N trames (N= quelques dizaines par exemple) la saisie du signal d'erreur E et on en détermine la valeur moyenne pixel par pixel. A partir de la trame suivante (N+1) , on applique pixel par pixel la correction ainsi déterminée à chaque ligne visible de chaque trame. Le résultat est ensuite converti sous forme analogique .

On a représenté en figure 7 une ligne de signal vidéo $V_o$ reçue par ledit récepteur étalon et affectée de distorsions diverses. Comme schématisé en figure 9, le signal d'erreur correspondant E est multiplié par -K pour donner le signal pondéré de correction C= -K.E. On ajoute C au signal de l'émetteur et on obtient à la réception le signal corrigé V tel que représenté en figure 8. Bien entendu, la correction s'effectue alors sur les lignes visibles à l'écran.

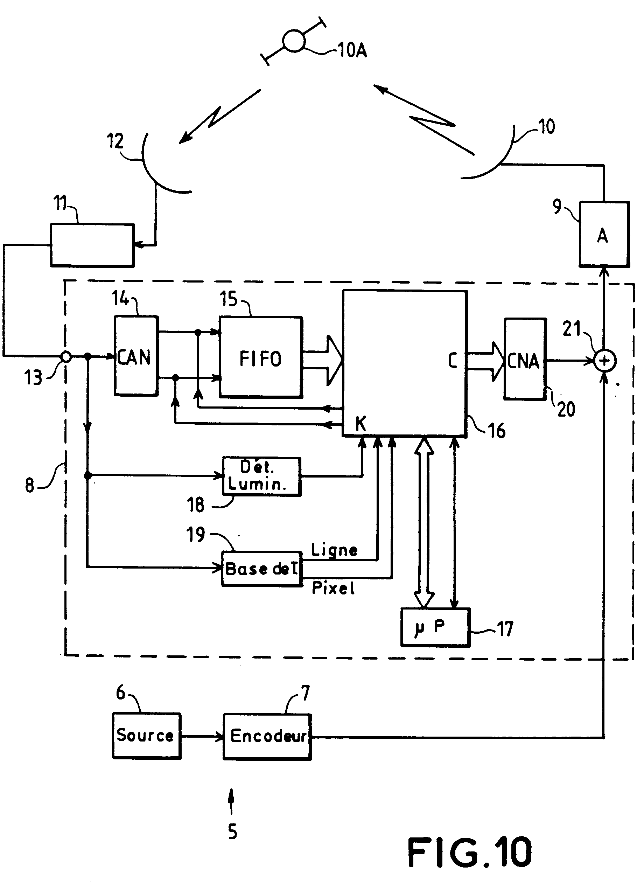

On a représenté en figure 10 le bloc-diagramme d'un émetteur de télévision 5 comportant un dispositif de correction conforme à l'invention. L'émetteur 5 comporte une source 6 de signaux vidéo. La source 6 est suivie d'un encodeur d'embrouillage 7, d'un circuit de correction 8, d'un circuit amplificateur d'émissiom 9, et d'une antenne d'émission 10. Dans l'exemple représenté sur le dessin, la transmission passe par un satellite 10A, et l'antenne 10 est d'un type approprié à une telle liaison, mais il est bien entendu que l'invention n'est pas limitée à une telle application et peut être mise en oeuvre dans des systèmes classiques à liaison terrestre. L'émetteur 5 comporte également un récepteur étalon 11 muni d'une antenne de réception 12 appropriée.

Le circuit de correction 8 comporte un borne d'entrée 13 recevant les signaux de sortie du récepteur étalon 11. La borne d'entrée 13 est reliée à un convertisseur analogique/numérique 14 dont la sortie est reliée à un circuit de mémorisation de lignes ou de trames 15, qui est dans le présent exemple une mémoire FIFO. La sortie de la mémoire 15 est reliée à un circuit logique 16 exécutant, à chaque ligne, le calcul de C=-K.E sous la commande d'un microprocesseur 17. La borne 13 est également reliée à un circuit 18 de détection du niveau moyen de luminance de chaque ligne ou de chaque trame, et à un circuit 19 de base de temps fournissant des signaux de synchronisation de lignes et de pixels. Les sorties respectives des circuits 18 et 19 sont reliées au circuit 16.

La sortie du circuit 16 est reliée à un convertisseur numérique/analogique 20 dont la sortie est reliée à une entrée d'un additionneur 21 dont l'autre entrée est reliée à l'encodeur 7. La sortie de l'additionneur 21 est reliée au circuit 9. A la sortie de l'additionneur 21 on recueille les signaux vidéo corrigés V= $V_o$+ C. Bien entendu, si les signaux vidéo reçus sont sous forme numérique, le convertisseur 14 est inutile.

## Revendications

1. Procédé de correction à l'émission de défauts de signaux de télévision , caractérisé par le fait que l'on fait émettre par l'émetteur, pendant au moins une partie des trames du signal vidéo, au moins une ligne de référence dans la partie non visible à l'écran des trames, que l'on reçoit à la station émettrice à l'aide d'un récepteur étalon les émissions de cet émetteur, que l'on échantillonne cette ligne de référence, que l'on produit un signal d'erreur à partir de la différence entre cette ligne et sa valeur théorique , que l'on en déduit un coefficient de correction pour chacun des échantillons de cette ligne, et que l'on applique ce coefficient de correction à au moins une partie des lignes des trames suivantes.

2. Procédé selon la revendication 1, caractérisé par le fait que l'on moyenne le signal d'erreur pendant plusieurs trames.

3. Procédé selon l'une des revendications précédentes, caractérisé par le fait que l'on pondère le coefficient de correction en fonction de la luminance de la ligne correspondante.

4. Procédé selon la revendication 3, caractérisé par le fait que l'on détermine le niveau moyen de luminance de la ligne.

5. Dispositif de correction de défauts de signaux de télévision lors de leur transmission, caractérisé par le fait qu'il comporte dans chaque récepteur appliquant la correction, entre la source de signaux vidéo (6) et les circuits d'émission (9),un convertisseur analogique/numérique (14) suivi d'un dispositif de mémorisation (15), d'un circuit logique de correction (16, 17) et d'un convertisseur numérique/analogique (20).

6. Dispositif selon la revendication 5, caractérisé par le fait que le circuit de mémorisation est une FIFO.

7. Dispositif selon la revendication 5 ou 6, caractérisé par le fait qu'il comporte en outre un circuit de détection de niveau moyen de luminance (18).

8. Dispositif selon l'une des revendications 5 à 7, caractérisé par le fait que le circuit logique de correction est commandé par un microprocesseur (17).

9. Emetteur de télévision caractérisé par le fait qu'il comporte un dispositif de correction selon l'une des revendications 5 à 8.

10. Emetteur selon la revendication 9, caractérisé par le fait qu'il comporte un dispositif d'embrouillage (7).

# FIG.1

# FIG.2

# FIG.3

# FIG.4

# FIG.5

# FIG.6

# FIG. 7

$$V = V_0 + C$$

$$C = -KE$$

# FIG.9

# FIG.8

**FIG.10**

**EP 0 469 990 A1**

Office européen
des brevets

**RAPPORT DE RECHERCHE EUROPEENNE**

Numero de la demande

EP 91 40 2131

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-2 413 367 (TEKTRONIX)<br>* Page 4, ligne 1 - page 5, ligne 25; figures 1-3 * | 1,5 | H 04 N 5/21 |
| Y | EP-A-0 171 759 (MATSUSHITA)<br>* Page 2, lignes 3-17; page 5, ligne 19 - page 11, ligne 16; figures 1,2,4 * | 1,5 | |
| A | | 3 | |
| A | WO-A-8 907 376 (RCA)<br>* Page 8, ligne 13 - page 11, ligne 12; page 28, lignes 1-7; figures 2,3 * | 1,2,5,6,8 | |
| A | PATENT ABSTRACTS OF JAPAN, vol. 13, no. 81 (E-719)[3429], 23 février 1989; & JP-A-63 260 383 (MATSUSHITA) 27-10-1988 | 9,10 | |

**DOMAINES TECHNIQUES RECHERCHES (Int. Cl.5)**

H 04 N

Le présent rapport a été établi pour toutes les revendications

| Lieu de la recherche | Date d'achèvement de la recherche | Examinateur |
|---|---|---|
| LA HAYE | 11-11-1991 | YVONNET J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8